# EUROPÄISCHE PATENTANMELDUNG

(11) **EP 4 711 238 A1**
(43) Veröffentlichungstag der Anmeldung: **18.03.2026**
(21) Anmeldenummer: 25200512.9
(22) Anmeldetag: 05.09.2025
(51) Int. Cl.: B62D 5/04, B62D 5/00

(54) **ELEKTROMECHANISCHES LENKSYSTEM UND VERFAHREN ZUM BETREIBEN EINES ELEKTROMECHANISCHEN LENKSYSTEMS MIT REDUZIERTER ENERGIERÜCKSPEISUNG**

(30) Priorität: 11.09.2024 BE 202405612
(71) Anmelder: thyssenkrupp Presta Aktiengesellschaft, 9492 Eschen (LI); thyssenkrupp AG, 45143 Essen (DE)
(72) Erfinder: Károly, Tamás Gergely, 9466 Sennwad (CH); Gyökeres, Jen, 1097 Budapest (HU)
(74) Vertreter: thyssenkrupp Intellectual Property GmbH

(57) **Zusammenfassung**

Die vorliegende Erfindung betrifft ein Verfahren zum Betreiben eines elektromechanischen Lenksystems (1) in einem Kraftfahrzeug, wobei das Lenksystem (1) wenigstens einen Aktuator (2, 3) mit wenigstens einem Elektromotor (21, 31) umfasst, wobei der wenigstens eine Elektromotor (21, 31) über einen DC-Bus (40) an ein elektrisches Bordnetz des Kraftfahrzeugs angebunden ist, und wobei der wenigstens eine Elektromotor (21, 31) fahrsituationsabhängig in einem Motorbetrieb oder einem Generatorbetrieb betrieben wird. Dabei wird von wenigstens einer Steuereinheit (22, 32) des Lenksystems (1) ein Ist-Spannungsniveau des DC-Busses (40) in Bezug auf ein Überschreiten eines Soll-Spannungsniveaus des DC Busses (40) um einen vorbestimmten Wert überwacht, wobei bei einer erkannten Überschreitung um einen ersten vorbestimmten Wert das Ist-Spannungsniveau durch eine Umwandlung von elektrischer Energie in wenigstens einem der Elektromotoren (21, 31) reduziert wird.

Ferner betrifft die Erfindung ein elektromechanisches Lenksystem (1), das ausgebildet ist, nach einem solchen Verfahren betrieben zu werden.

## Beschreibung

Die Erfindung betrifft ein Verfahren zum Betreiben eines elektromechanischen Lenksystems in einem Kraftfahrzeug, wobei das Lenksystem wenigstens einen Aktuator mit wenigstens einem Elektromotor umfasst, wobei der wenigstens eine Elektromotor über einen DC-Bus, auch Gleichspannungs-Bus genannt, an ein elektrisches Bordnetz des Kraftfahrzeugs angebunden ist, und wobei der wenigstens eine Elektromotor fahrsituationsabhängig in einem Motorbetrieb oder einem Generatorbetrieb betrieben wird. Des Weiteren betrifft die Erfindung ein elektromechanisches Lenksystem, das wenigstens einen Aktuator mit wenigstens einem Elektromotor und wenigstens einer Steuereinheit umfasst, wobei der wenigstens eine Elektromotor fahrsituationsabhängig in einem Motorbetrieb oder einem Generatorbetrieb betrieben werden kann. Insbesondere umfasst das Lenksystem insbesondere einen Lenksteller oder einen Lenksteller und einen Feedback-Aktuator als Aktuatoren.

Im Stand der Technik sind ein solches Verfahren für ein Steer-by-Wire-Lenksystem als elektromechanisches Lenksystem und ein Steer-by-Wire-Lenksystem mit einem Feedback-Aktuator als erstem Aktuator und einem Lenksteller als zweitem Aktuator beispielsweise aus der EP 4 273 025 A1 bekannt.

Ein DC-Bus in einem Kraftfahrzeug, insbesondere in Elektrofahrzeugen, spielt eine zentrale Rolle in der Verteilung und dem Management der elektrischen Energie innerhalb des Kraftfahrzeugs. Der DC-Bus ist eine elektrische Leitung, die Gleichstrom (DC: direct current) von der Fahrzeugbatterie verschiedenen elektrischen Verbrauchern in dem Kraftfahrzeug bereitstellt, insbesondere auch den Aktuatoren eines Lenksystems, weiter insbesondere einem Lenksteller und/oder einem Feedback-Aktuator eines Lenksystems. In Abhängigkeit von dem Leistungsbedarf der jeweiligen an dem DC-Bus angeschlossenen elektrischen Verbraucher kann der DC-Bus auch DC/DC-Wandler umfassen, um unterschiedliche Spannungsniveaus bereitstellen zu können. Für einen fehlerfreien Betrieb der an dem DC-Bus angeschlossenen elektrischen Verbraucher ist es erforderlich, dass die bereitgestellte Spannung im Wesentlichen konstant bleibt.

Insbesondere wenn ein an dem DC-Bus angeschlossener Elektromotor in einem Generatorbetrieb betrieben wird, besteht dabei das Problem, dass hierbei elektrische Ströme generiert werden, weil die für den DC-Bus die Betriebsspannung bereitstellende Gleichspannungsquelle und/oder ein Anschluss an die Gleichspannungsquelle, insbesondere ein DC/DC-Wandler, unter anderem aus Kostengründen nicht oder bei neueren Fahrzeugen, die nicht lediglich eine klassische Starterbatterie (Autobatterie) umfassen, nicht mehr zur Aufnahme solcher generierten Ströme geeignet sind. Insbesondere die Elektromotoren eines Lenksystems, weiter insbesondere der Elektromotor eines Feedback-Aktuators eines Lenksystems, werden dabei auch in einem Normalbetrieb des Lenksystems in einem Generatorbetrieb betrieben. Die dabei generierten Ströme können daher potentiell Schäden an Elektronikkomponenten verursachen. So sind herkömmliche Fahrzeugbatterien, die insbesondere in Kraftfahrzeugen eingesetzt werden, die ausschließlich einen Verbrennungsmotor umfassen, zwar häufig geeignet, solche generierten Ströme aufzunehmen. Neuere Auslegungen von Bordnetzen mit einer höheren Bordnetzspannung und eine Bereitstellung der Betriebsspannung über eine Antriebsbatterie bei Hybrid- oder Elektrofahrzeugen unter Nutzung eines DC-Busses sind aber regelmäßig nicht dazu ausgelegt ist, generierte Ströme aufzunehmen oder rückzuführen. Diese Problematik wird auch in der DE 10 2021 205 851 A1 thematisiert, wobei in dieser Druckschrift vorgeschlagen wird, nicht benötigte Verbraucher zuzuschalten, wenn durch eine Rückspeisung eine Überspannung im Bordnetz bewirkt würde.

Vor diesem Hintergrund ist es eine Aufgabe der vorliegenden Erfindung, ein verbessertes Verfahren zum Betreiben eines elektromechanischen Lenksystems und ein verbessertes elektromechanisches Lenksystem bereitzustellen. Insbesondere soll dabei verhindert werden, dass in einem Generatorbetrieb eines Elektromotors eines Aktuators des Lenksystems Schäden durch die generierten elektrischen Ströme entstehen.

Vor diesem Hintergrund ist es eine Aufgabe der vorliegenden Erfindung, ein verbessertes Verfahren zum Betreiben eines elektromechanischen Lenksystems und ein verbessertes elektromechanisches Lenksystem bereitzustellen. Insbesondere soll dabei verhindert werden, dass in den DC-Bus, der die Aktuatoren des Lenksystems mit Energie versorgt, Ströme zurückgeführt werden, die zu kritischen Überspannungen führen.

Zur Lösung dieser Aufgabe werden ein Verfahren zum Betreiben eines elektromechanischen Lenksystems und ein elektromechanisches Lenksystem gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines elektromechanischen Lenksystems, insbesondere eines Steer-by-Wire-Lenksystems, in einem Kraftfahrzeug vor, wobei das Lenksystem wenigstens einen Aktuator mit wenigstens einem Elektromotor umfasst, wobei der wenigstens eine Elektromotor über einen DC-Bus an ein elektrisches Bordnetz des Kraftfahrzeugs angebunden ist, und wobei der wenigstens eine Elektromotor fahrsituationsabhängig in einem Motorbetrieb oder einem Generatorbetrieb betrieben wird. Weiter ist vorgesehen, dass von wenigstens einer Steuereinheit des Lenksystems ein Ist-Spannungsniveau des DC-Busses in Bezug auf ein Überschreiten eines Soll-Spannungsniveaus des DC-Busses um einen vorbestimmten Wert überwacht wird. Bei einer erkannten Überschreitung des Soll-Spannungsniveaus um einen ersten vorbestimmten Wert wird dann das Ist-Spannungsniveau durch eine Umwandlung von elektrischer Energie in wenigstens einem der Elektromotoren reduziert. Von an dem DC-Bus angeschlossenen Aktuatoren erzeugte Ströme können so vorteilhafterweise energetisch in dem wenigstens einen Elektromotor des Lenksystems umgewandelt werden. Insbesondere wird der Phasenwiderstand des wenigstens einen Elektromotors des Lenksystems für die Kompensation eines regenerativen Gleichstroms in dem DC-Bus verwendet.

Der wenigstens eine Elektromotor ist insbesondere als ein Dreiphasenmotor ausgebildet, weiter insbesondere als ein Permanentmagnet-Synchronmotor. Durch die Umwandlung des Stroms direkt in einem Elektromotor des Lenksystems werden vorteilhafterweise Schäden durch in den DC-Bus eingeleitete generierte Ströme weitgehend vermieden. Die Umwandlung bleibt für einen Fahrzeugnutzer dabei vorteilhafterweise weitgehend unbemerkt und weiter vorteilhaft ohne negative Einflüsse auf das Lenkverhalten des Kraftfahrzeugs und ohne negative Einflüsse auf das Lenkgefühl für den Fahrzeugnutzer. Das Spannungsniveau auf dem DC-Bus kann insbesondere 12 V oder 48 V (V: Volt) betragen. Andere Spannungsniveaus, insbesondere auch größer 48 V können ebenfalls vorgesehen werden.

Insbesondere ist vorgesehen, dass das Lenksystem einen Lenksteller als Aktuator mit einem Elektromotor aufweist. Der Lenksteller ist dabei vorteilhafterweise dazu ausgebildet, eine erfasste Lenkvorgabe in einen Radlenkwinkel von gelenkten Rädern umzusetzen. Außerdem kann vorgesehen sein, insbesondere wenn das Lenksystem ein Steer-by-Wire-Lenksystem ist, dass das Lenksystem als weiteren Aktuator einen Feedback-Aktuator mit einem Elektromotor aufweist, wobei der Feedback-Aktuator insbesondere ausgebildet ist, über eine Lenkwelle auf eine Lenkhandhabe zu wirken. Der Elektromotor des Lenkstellers und/oder der Elektromotor des Feedback-Aktuators können dabei jeweils redundant ausgebildet sein. Insbesondere kommt es bei einem Normalbetrieb des Lenksystems durch diese Elektromotoren, insbesondere durch den Betrieb des Elektromotors des Feedback-Aktuators, zu einer Generierung von elektrischen Strömen, die die vorstehend beschriebenen Überschreitung des Soll-Spannungsniveaus des DC-Busses um einen vorbestimmten Wert verursachen können. Vorteilhafterweise werden diese Ströme aber direkt von dem wenigstens einen Elektromotor des Lenksystems "verbraucht", also energetisch umgewandelt. Vorteilhafterweise können aber insbesondere auch durch an dem DC-Bus angeschlossene weitere Aktuatoren, die insbesondere nicht zu dem Lenksystem gehören, erzeugte Ströme in dem wenigstens einen Elektromotor des Lenksystems energetisch umgewandelt werden.

Gemäß einer vorteilhaften Weiterbildung des Verfahrens erfolgen vorteilhafterweise für unterschiedliche Ist-Spannungsniveaus, die das Soll-Spannungsniveau überschreiten, den jeweiligen Ist-Spannungsniveaus zugeordnete unterschiedliche Ansteuerungen des wenigstens einen Elektromotors. Insbesondere sind unterschiedliche Maßnahmen für die Art und Weise der Umwandlung der elektrischen Energie in dem wenigstens einen Elektromotor definiert. So ist insbesondere vorgesehen, dass das Lenksystem mehrere Elektromotoren umfasst, wobei ein konkreter Elektromotor des Lenksystems vorteilhafterweise in Abhängigkeit von der Höhe der Abweichung des Ist-Spannungsniveaus von dem Soll-Spannungsniveau zur energetischen Umwandlung der generierten Ströme angesteuert werden, insbesondere einerseits so, dass das Soll-Spannungsniveau möglichst konstant gehalten wird und andererseits so, dass das für einen Fahrzeugnutzer wahrnehmbare Lenkverhalten und das für einen Fahrzeugnutzer wahrnehmbare Lenkgefühl nicht beeinträchtigt wird.

Eine weitere vorteilhafte Ausgestaltung sieht vor, dass bei einer erkannten Überschreitung des Soll-Spannungsniveaus bis zu einem zweiten Wert, wobei der zweite Werte kleiner ist als der erste Wert, eine dem DC-Bus zugeordnete DC-Bus-Steuereinheit eine Reduzierung des Ist-Spannungsniveaus steuert. Hierbei wird vorteilhafterweise ausgenutzt, dass der DC-Bus regelmäßig so ausgelegt ist, dass dieser in geringem Umfang Überschreitungen des Soll-Spannungsniveaus abfangen kann, insbesondere wenn generierte Ströme kleiner als 10 A (A: Ampere) sind. Vorteilhafterweise kann so bei kleineren Überschreitungen des Soll-Spannungsniveaus von einer Ansteuerung des wenigstens einen Elektromotors des Lenksystems zur energetischen Umwandlung dieser Ströme abgesehen werden.

Weiter vorteilhaft ist vorgesehen, dass der DC-Bus redundant ausgelegt ist und eine DC-A-Seite und eine DC-B-Seite aufweist, wobei die DC-B-Seite eine Spannungsversorgung bei einem Ausfall der DC-A-Seite übernimmt, wobei Toleranzen bezüglich einer Abweichung des Ist-Spannungsniveaus von dem Soll-Spannungsniveau in Bezug auf die DC-A-Seite kleiner sind als in Bezug auf die DC-B-Seite, und wobei für Abweichungen des Ist-Spannungsniveaus von dem Soll-Spannungsniveau für die DC-A-Seite und die DC-B-Seite unterschiedliche vorbestimmte Werte für eine Auslösung der Umwandlung elektrischer Energie in dem wenigstens einen Elektromotor festgelegt sind. Insbesondere steuert die DC-A-Seite, insbesondere eine der DC-A-Seite zugeordnete Steuereinheit, eine Reduzierung des Ist-Spannungsniveaus aufgrund von generierten Strömen, insbesondere von von dem Elektromotor des Feedback-Aktuators generierten Strömen, weiter insbesondere von generierten Strömen bis zu maximal 10 A. Vorteilhafterweise wird so zwischen einem Normalbetrieb und einem Sonderbetrieb differenziert, wobei bei dem Normalbetrieb eine Versorgungsspannung über die DC-A-Seite bereitgestellt wird, und wobei bei dem Normalbetrieb Schäden an elektrischen Abnehmern, die an dem DC-Bus angeschlossen sind, vermieden werden sollen, und wobei bei dem Sonderbetrieb eine Aufrechterhaltung zumindest einer Basisfunktionalität des Kraftfahrzeugs im Vordergrund steht.

Gemäß einer weiteren besonders vorteilhaften Ausgestaltung umfasst das Lenksystem eine Mehrzahl von Aktuatoren, wobei jedem Aktuator jeweils eine Steuereinheit zugeordnet ist. Vorteilhafterweise führt dabei jede dieser Steuereinheiten die Überwachung des Ist-Spannungsniveaus des DC-Busses in Bezug auf ein Überschreiten des Soll-Spannungsniveaus des DC-Busses um den vorbestimmten Wert durch, wobei insbesondere für jede der Steuereinheiten jeweils eine andere Abweichung des Ist-Spannungsniveaus von dem Soll-Spannungsniveau vorgegeben ist, die eine Ansteuerung zur Reduzierung des Ist-Spannungsniveaus auslöst, insbesondere eine Ansteuerung zur Heranführung des Ist-Spannungsniveaus an das Soll-Spannungsniveau. Vorteilhafterweise erfolgt die Erfassung des Ist-Spannungsniveaus dabei in Echtzeit. Weiter vorteilhaft wird die Erfassung des Ist-Spannungsniveaus zwischen den Steuereinheiten synchronisiert, wobei vorteilhafterweise der DC-Bus als ein indirekter Kommunikationskanal genutzt wird. Insbesondere wird die anliegende Gleichspannung selbst als "Kommunikationskanal" genutzt, da diese in Echtzeit von allen relevanten Steuergeräten (ECUs; ECU: Electronic Control Unit) im DC-Bus gemessen wird. Vorteilhafterweise ist so keine direkte private CAN-Kommunikation (CAN: Computer Area Network) erforderlich, um das Zusammenwirken der Steuereinheiten zu ermöglichen. Vorteilhafterweise überwacht somit jede Steuereinheit einer Aktuatoreinheit nur genau ein Überschreiten eines für die jeweilige Steuereinheit konkret vorgegebenen Ist-Spannungswerts, und löst bei einer Überschreitung einen für die jeweilige Steuereinheit vorgegebenen Steuerbefehl aus. Vorteilhafterweise ist das Verfahren auf diese Weise wenig fehleranfällig und sehr robust.

Vorzugsweise wird der wenigstens eine Elektromotor des Lenksystems von einer Steuereinheit, insbesondere jeweils von einer Steuereinheit, mittels einer Vektorregelung gesteuert, wobei ein d-Vektor mit einem zugeordneten Strom I_d und ein q-Vektor mit einem zugeordneten Strom I_q eines rotorbezogenen d/q-Systems für den wenigstens einen Elektromotor mittels eines ersten Reglers, insbesondere eines Pl-Reglers, der Steuereinheit beeinflusst werden. Vorteilhafterweise wird dabei zur energetischen Umwandlung eines auf den DC-Bus aufgebrachten generierten Stroms der d-Vektor des rotorbezogenen d/q-Systems und damit der Strom I_d für den ersten Elektromotor angepasst.

Für eine solche Vektorregelung erfolgt dabei insbesondere in bekannter Weise eine mathematische Umrechnung mittels einer Clarke-Transformation und einer anschließenden Park-Transformation von einem statorbezogenen dreiphasigen System in das rotorbezogene d/q-System, wobei der d-Vektor und der q-Vektor orthogonal zueinander ausgerichtet sind. Wie bei einer Vektorregelung üblich, wird der q-Vektor zur Einstellung eines bereitzustellenden Drehmoments genutzt, wobei der d-Vektor die magnetische Flussdichte beeinflusst.

Zur energetischen Umwandlung und Reduzierung eines das Soll-Spannungsniveau überschreitenden Ist-Spannungsniveaus wird also der d-Vektor des rotorbezogenen d/q-Systems für einen Elektromotor des Lenksystems angepasst, insbesondere erhöht. Der d-Vektor wird dabei vorteilhafterweise derart angepasst, dass das Ist-Spannungsniveau wieder auf das Soll-Spannungsniveau abgesenkt wird, und insbesondere ein auf den DC-Bus aufgebrachter generierter Strom vollständig oder zumindest nahezu vollständig in dem Elektromotor des Lenksystems umgewandelt wird. Die Anpassung des d-Vektors und somit die Anpassung des I_d-Stroms erfolgt dabei insbesondere mittels des für die Vektorregelung genutzten Reglers. Der q-Vektor und somit der I_q-Strom bleiben dabei vorteilhafterweise unbeeinflusst, sodass kein für einen Fahrzeugnutzer beim Bedienen des Lenksystems wahrnehmbares Drehmoment durch die Umwandlung der auf den DC-Bus aufgebrachten generierten Ströme erzeugt wird.

Vorzugsweise umfasst das Lenksystem als den wenigstens einen Aktuator mit dem wenigstens einen Elektromotor einen über eine Lenkwelle auf eine Lenkhandhabe wirkenden Feedback-Aktuator mit einem ersten Elektromotor und einen über ein Lenkgetriebe auf lenkbare Räder des Kraftfahrzeugs wirkenden Lenksteller mit einem zweiten Elektromotor. Dabei wird insbesondere der zweite Elektromotor des Lenkstellers zur Umwandlung von generierter Energie, die das Ist-Spannungsniveau über das Soll-Spannungsniveau hebt, angesteuert. Bei der erkannten Überschreitung um mindestens den vorgegebenen ersten Wert wird das Ist-Spannungsniveau also vorteilhafterweise durch eine Umwandlung von elektrischer Energie in dem zweiten Elektromotor reduziert. Diese Auslegung nutzt insbesondere aus, dass ein Elektromotor eines Lenkstellers bei einem Betrieb eines Kraftfahrzeugs überwiegend in einem Motorbetrieb betrieben wird und kaum in einem Generatorbetrieb betrieben wird, wohingegen ein Elektromotor eines Feedback-Aktuators häufig in einem Generatorbetrieb betrieben wird. Durch eine Vermeidung einer Umwandlung von elektrischer Energie in dem ersten Elektromotor des Feedback-Aktuators kann zudem vorteilhafterweise eine Welligkeit in dem ersten Elektromotor gering gehalten werden, wodurch vorteilhafterweise Beeinträchtigungen des Lenkgefühls für einen Fahrer vermieden oder zumindest gering gehalten werden.

Weiter vorteilhaft ist vorgesehen, dass der zweite Elektromotor des Lenkstellers redundant mit einer separat ansteuerbaren A-Seite und einer separat ansteuerbaren B-Seite ausgebildet ist, wobei bei der erkannten Überschreitung um mindestens den vorgegebenen ersten Wert das Ist-Spannungsniveau durch eine Umwandlung von elektrischer Energie in der A-Seite des zweiten Elektromotors reduziert wird. Gemäß einer vorteilhaften Weiterbildung wird bei der erkannten Überschreitung um mindestens einen vorgegebenen dritten Wert, wobei der dritte Wert größer ist als der erste Wert, das Ist-Spannungsniveau durch eine Umwandlung von elektrischer Energie in der B-Seite des zweiten Elektromotors reduziert, beziehungsweise weiter reduziert. Vorteilhafterweise ist so eine kaskadierte Maßnahmenkette definiert, um ein Ist-Spannungsniveau, das das Soll-Spannungsniveau deutlich überschritten hat, wieder an das Soll-Spannungsniveau zurückzuführen. Insbesondere ist vorgesehen, dass die A-Seite und die B-Seite als zwei vollständig getrennte Systeme betrachtet werden können, bei die A-Seite über die DC-A-Seite mit Spannung versorgt wird und die B-Seite über die DC-B-Seite mit Spannung versorgt wird.

Als eine weitere vorteilhafte Weiterbildung ist vorgesehen, dass bei einer erkannten Überschreitung um mindestens einen vorgegebenen zweiten Wert, wobei der zweite Werte größer ist als der erste Wert, das Ist-Spannungsniveau durch eine ergänzende Umwandlung von elektrischer Energie in dem ersten Elektromotor, also dem Elektromotor des Feedback-Aktuators reduziert wird. Vorteilhafterweise lassen sich durch diese zusätzlichen Maßnahmen, insbesondere der unterschiedlichen Ansteuerung von A-Seite und B-Seite des Elektromotors des Lenkstellers und/oder der Ansteuerung des ersten Elektromotors des Feedback-Aktuators Einschränkungen bei einem durch den Elektromotor des Lenkstellers bereitzustellenden Dämpfungsmoment verhindern. Insbesondere ist also vorgesehen, dass zunächst die A-Seite des Elektromotors des Lenkstellers, dann der Elektromotor des Feedback-Aktuators und dann die B-Seite des Elektromotors des Lenkstellers zur Umwandlung überschüssiger elektrischer Energie angesteuert wird, wenn das Ist-Spannungsniveau das Soll-Spannungsniveau übersteigt.

Zur Lösung der eingangs genannten Aufgabe wird des Weiteren ein elektromechanisches Lenksystem, insbesondere ein Steer-by-Wire-Lenksystem, vorgeschlagen, das wenigstens einen Aktuator mit wenigstens einem Elektromotor und wenigstens einer Steuereinheit umfasst, wobei der wenigstens eine Elektromotor fahrsituationsabhängig in einem Motorbetrieb oder einem Generatorbetrieb betrieben werden kann. Das Lenksystem ist dabei ausgebildet, nach einem erfindungsgemäß ausgestalteten Verfahren betrieben zu werden. Die im Zusammenhang mit dem beschriebenen Verfahren erläuterten Merkmale und Vorteile gelten entsprechend auch für das vorgeschlagene Lenksystem.

Eine vorteilhafte Ausgestaltung des Lenksystems sieht vor, dass das Lenksystem als einen ersten Aktuator einen über eine Lenkwelle auf eine Lenkhandhabe wirkenden Feedback-Aktuator umfasst und als einen zweiten Aktuator einen über ein Lenkgetriebe auf lenkbare Räder des Kraftfahrzeugs wirkenden Lenksteller umfasst. Ein erster Elektromotor ist dabei ein Elektromotor des Feedback-Aktuators, dem eine erste Steuereinheit zugeordnet ist, und ein zweiter Elektromotor ein Elektromotor des Lenkstellers, dem eine zweite Steuereinheit ist, wobei die erste Steuereinheit und die zweite Steuereinheit insbesondere eine von einem Powerpack des jeweiligen Elektromotors umfasst Steuereinheit sein kann. Die Auslegung des Lenksystems nutzt insbesondere aus, dass ein Elektromotor eines Lenkstellers bei einem Betrieb eines Kraftfahrzeugs überwiegend in einem Motorbetrieb betrieben wird und kaum in einem Generatorbetrieb betrieben wird, wohingegen ein Elektromotor eines Feedback-Aktuators häufig im Generatorbetrieb betrieben wird. Vorteilhafterweise ist die zusätzliche Welligkeit in dem ersten Elektromotor und somit in dem Feedback-Aktuator für einen Fahrer beim Betrieb des Lenksystems in einem Kraftfahrzeug nicht zu spüren. Dies bedeutet, dass sich das Lenkgefühl vorteilhafterweise nicht ändert.

Der erste Elektromotor und der zweite Elektromotor sind insbesondere jeweils als ein Dreiphasenmotor ausgebildet, weiter insbesondere jeweils als ein Permanentmagnet-Synchronmotor. Die erste Steuereinheit und die zweite Steuereinheit sind dem jeweiligen Elektromotor vorteilhafterweise direkt zugeordnet. Die erste Steuereinheit und die zweite Steuereinheit können aber insbesondere von einer übergeordneten Steuereinheit umfasst sein. Der erste Elektromotor und der zweite Elektromotor werden vorteilhafterweise mittels einer Vektorregelung angesteuert, wobei vorteilhafterweise jedem der Elektromotoren ein entsprechender Regler, insbesondere ein Pl-Regler zugeordnet ist.

Der Pl-Regler hat vorteilhafterweise einen von der Drehgeschwindigkeit des jeweiligen Elektromotors abhängigen Referenzeingang für den Fall, dass der erste Elektromotor in einem Generatorbetrieb arbeitet. Ein tatsächlich in dem DC-Bus zur Energieversorgung der Elektromotoren des Lenksystems bereitgestellter Strom wird vorteilhaferweise aus den d-q Spannungs-Ausgängen des Pl-Reglers und aus den Informationen bezüglich der d-q Ströme berechnet. Der Pl-Regler ist dabei vorteilhafterweise ausgebildet, den Id-Strom, der benötigt wird, um den regenerativ in dem DC-Bus von einem Elektromotor im Generatorbetrieb erzeugten Strom zu reduzieren. Dieser Id-Strom wird vorteilhafterweise zum Id-Referenzausgang der zweiten Steuerung des zweiten Elektromotors hinzugefügt. Mit der Summe Id_ref wird dann der zweite Elektromotor betrieben, und so die im Generatorbetrieb erzeugten Ströme energetisch umgewandelt, vorteilhafterweise nahezu ohne Einfluss auf das von dem Elektromotor bereitzustellende Drehmoment.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten perspektivischen Darstellung ein Ausführungsbeispiel für ein erfindungsgemäß ausgebildetes elektromechanisches Lenksystem; und
- Fig. 2: ein vereinfacht dargestelltes Blockdiagramm zur Erläuterung eines Ausführungsbeispiels für ein erfindungsgemäß ausgebildetes Verfahren zum Betreiben eines elektromechanischen Lenksystems.

In den verschiedenen Figuren sind gleiche Teile in der Regel mit den gleichen Bezugszeichen versehen und werden daher mitunter auch jeweils nur im Zusammenhang mit einer der Figuren erläutert.

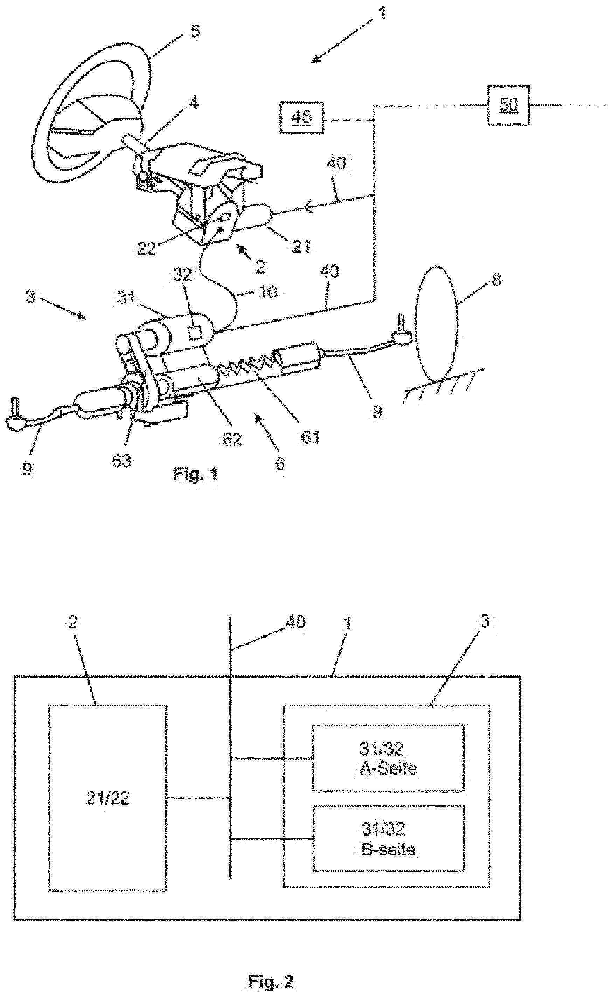

In Fig. 1 ist vereinfacht ein Ausführungsbeispiel für ein erfindungsgemäß ausgebildetes elektromechanisches Lenksystem 1 dargestellt, das in diesem Ausführungsbeispiel als Steer-by-Wire-Lenksystems ausgebildet ist. Das Lenksystem 1 umfasst in diesem Ausführungsbeispiel einen ersten Aktuator 2 mit einem ersten Elektromotor 21 und mit einer ersten Steuereinheit 22. Weiter umfasst das Lenksystem 1 einen zweiten Aktuator 3 mit einem zweiten Elektromotor 31 und mit einer zweiten Steuereinheit 32. Der erste Aktuator 2 ist ein über eine Lenkwelle 4 des Lenksystems 1 auf eine drehfest mit der Lenkwelle 4 verbundene Lenkhandhabe 5 wirkender Feedback-Aktuator und der erste Elektromotor 21 dementsprechend ein Feedback-Aktuator-Elektromotor. Der zweite Aktuator 3 des Lenksystems 1 ist ein über ein Lenkgetriebe 6 auf lenkbare Räder 8 des Kraftfahrzeugs wirkender Lenksteller und der zweite Elektromotor 31 dementsprechend ein Lenksteller-Elektromotor. Beide Elektromotoren 21, 31 sind Dreiphasenmotoren, insbesondere Permanentmagnet-Synchronmotoren.

Der erste Elektromotor 21 wird fahrsituationsabhängig in einem Motorbetrieb betrieben, insbesondere zur Erzeugung eines aktiven Gegenlenkens gegen eine von einem Fahrer auf die Lenkhandhabe 5 aufgebrachte Lenkeingabe, oder in einem Generatorbetrieb betrieben, insbesondere wenn einer von einem Fahrer eingebrachten Lenkbewegung ein gewisser Lenkwiderstand entgegengebracht wird. Der erste Aktuator 2 mit dem ersten Elektromotor 21 ist also insbesondere ausgebildet, ein Drehmoment beziehungsweise ein Lenkwiderstands-Drehmoment auf die Lenkwelle 4 auszuüben, insbesondere zur Vermittlung eines für einen Fahrer eines Kraftfahrzeugs wahrnehmbaren Lenkgefühls.

Auch der zweite Elektromotor 31 kann grundsätzlich in einem Motorbetrieb und einem Generatorbetrieb betrieben werden, wobei ein Generatorbetrieb in Bezug auf den zweiten Elektromotor 31 vergleichsweise selten auftritt, beispielsweise dann, wenn den lenkbaren Räder 8 aufgrund eines Hindernisses von außen ein anderen Radlenkwinkel aufgezwungen wird. Ein Motorbetrieb des zweiten Elektromotors 31 ist dabei insbesondere dann erforderlich, wenn eine erfasste Lenkvorgabe, insbesondere eine von einem Fahrer über die Lenkhandhabe 5 eingebrachte Lenkbewegung, in einen entsprechenden Radlenkwinkel der gelenkten Räder 8 umgesetzt werden muss. Zur Umsetzung einer Lenkvorgabe in einen Radlenkwinkel der lenkbaren Räder 8 wirkt der zweite Aktuator 3 über das Lenkgetriebe 6 auf die lenkbaren Räder 8.

Konkret ist in diesem Ausführungsbeispiel vorgesehen, dass der zweite Elektromotor 31 des zweiten Aktuators 3 über einen Transmissionsriemen 63 auf einen mit einer als Zahnstange ausgebildeten Koppelstange 61 in Wirkverbindung stehenden Spindeltrieb 62 einwirkt. Durch entsprechende Ansteuerung des zweiten Elektromotors 31 wird der Spindeltrieb 62 zur Umsetzung einer Lenkvorgabe in eine Lenkbewegung der lenkbaren Räder 8 angetrieben. Dabei wirkt der zweite Aktuator über den mittels des zweiten Elektromotors 31 angetriebenen Spindeltrieb 62 auf die Koppelstange 61 und löst so eine Lenkbewegung der lenkbaren Räder 8 eines Kraftfahrzeugs aus, wobei die lenkbaren Räder 8 in diesem Ausführungsbeispiel in bekannter Weise über Spurstangen 9 mit der Koppelstange 61 verbunden sind. Die Spurstangen 9 selbst sind in bekannter Weise über Achsschenkel mit je einem gelenkten Rad 8 verbunden.

Der erste Elektromotor 21 und der zweite Elektromotor 31 des Lenksystems 1 sind über einen DC-Bus 40 an ein elektrisches Bordnetz des Kraftfahrzeugs angebunden, wobei an dem DC-Bus 40 weitere elektrische Verbraucher (in Fig. 1 nicht explizit dargestellt) angebunden sind, insbesondere auch über einen DC/DC-Wandler 50 des DC-Busses 40. Die für einen Motorbetrieb der Elektromotoren 21, 31 benötigte Energie wird dabei über den DC-Bus 40 bereitgestellt.

Mittels der den Elektromotoren 21, 31 zugeordneten Steuereinheiten 22, 32 werden der erste Elektromotor 21 und der zweite Elektromotor 31 jeweils basierend auf einer Vektorregelung angesteuert. Dazu wird das statorbezogene dreiphasige System in bekannter Weise in ein rotorbezogenes d/q-System überführt, was unter Verwendung einer Clarke-Transformation mit anschließender Park-Transformation durchgeführt wird. Der so für die Steuerung des jeweiligen Elektromotors 21, 31 erhaltene d-Vektor und erhaltene q-Vektor werden dann mittels eines von der jeweiligen Steuereinheit 22, 32 umfassten Pl-Reglers zur Umsetzung einer Steuerungsvorgabe entsprechend angepasst. Wie üblich wird dabei über eine Anpassung des q-Werts das von dem jeweiligen Elektromotor 21, 32 bereitzustellende Drehmoment gesteuert, wohingegen der d-Wert Einfluss auf die magnetische Flussdichte hat.

Der erste Elektromotor 21 und der zweite Elektromotor 31 werden fahrsituationsabhängig in einem Motorbetrieb oder einem Generatorbetrieb betrieben, wobei ein Generatorbetrieb des zweiten Elektromotors 31 im Normalfall selten auftritt. Während des Betriebs des Kraftfahrzeugs überwachen die erste Steuereinheit 22 und die zweite Steuereinheit 32 des Lenksystems 1, ob ein Ist-Spannungsniveau des DC-Busses 40 ein Soll-Spannungsniveaus des DC-Busses 40 um einen vorbestimmten Wert übersteigt. In diesem Ausführungsbeispiel ist dabei weiter vorgesehen, dass zur Reduzierung des Ist-Spannungsniveaus hin zu dem Soll-Spannungsniveau elektrische Energie in dem zweiten Elektromotor 31 umgewandelt wird, wenn die zweite Steuereinheit 32 erkannt hat, dass das Ist-Spannungsniveau des DC-Busses 40 das Soll-Spannungsniveau des DC-Busses 40 um einen vorgegebenen ersten Wert überschritten hat.

Ein solches Überschreiten des Soll-Spannungsniveaus in dem DC-Bus 40 kann insbesondere dann auftreten, wenn der erste Elektromotor 21 in einem Generatorbetrieb betrieben wird. Die zweite Steuereinheit 32 steuert dann den zweiten Elektromotor 31 mittels eines von der zweiten Steuereinheit 32 umfassten Pl-Reglers so an, dass ein in dem Generatorbetrieb des ersten Elektromotors 21 generierter Strom von dem zweiten Elektromotor 21 energetisch umgewandelt wird.

Wird nun der erste Elektromotor 21 in einem Generatorbetrieb betrieben, sodass das Ist-Spannungsniveau das Soll-Spannungsniveau um den vorgegebenen ersten Wert übersteigt, so wird der zweite Elektromotor 31 von dem Pl-Regler der zweiten Steuereinheit 32 so angesteuert, dass ein im Rahmen der Vektorregelung vorgegebener I_d-Strom für den zweiten Elektromotor 31 angepasst wird, insbesondere erhöht wird, was durch entsprechende Anpassung des d-Vektors erfolgt. Dadurch wird der in dem Generatorbetrieb des ersten Elektromotors 21 generierte Strom, der zu einer unerwünschten Erhöhung des Ist-Spannungsniveaus geführt hat, von dem zweiten Elektromotor 31 energetisch umgewandelt. Dadurch, dass dabei nur der d-Vektor, nicht aber der q-Vektor angepasst wird, hat der angepasste Strom I_d vorteilhafterweise keinen Einfluss auf das von einem Fahrzeugnutzer beim Lenken wahrgenommene Verhalten des Lenksystems 1. Der von dem ersten Elektromotor 21 generierte Strom wird so vorteilhafterweise in dem zweiten Elektromotor 31 "verbrannt" und belastet somit vorteilhafterweise nicht den DC-Bus 40 und auch nicht an den DC-Bus 40 angeschlossene weitere Elektronikkomponenten. Insbesondere ist vorgesehen, dass verschiedene Werte vorgegeben sind, wobei überwacht wird, um welchen Wert das Ist-Spannungsniveau das Soll-Spannungsniveau wenigstens überschreitet.

Eine vorteilhafte Ausgestaltung eines Verfahrens zum Betreiben eines elektromechanischen Lenksystems 1 in einem Kraftfahrzeug, insbesondere des in Fig. 1 dargestellten Steer-by-Wire-Lenksystems 1, wird unter Bezugnahme auf das in Fig. 2 dargestellte Blockschaltbild näher erläutert.

Dabei ist wiederum vorgesehen, dass das Lenksystem 1 ein Steer-by-Wire-Lenksystem ist, das als einen ersten Aktuator 2 einen über eine Lenkwelle auf eine Lenkhandhabe wirkenden Feedback-Aktuator mit einem ersten Elektromotor 21 und als einen zweiten Aktuator 3 einen über ein Lenkgetriebe auf lenkbare Räder des Kraftfahrzeugs wirkenden Lenksteller mit einem zweiten Elektromotor 31 umfasst. Der zweite Elektromotor 31 des Lenkstellers ist dabei redundant mit einer separat ansteuerbaren A-Seite und einer separat ansteuerbaren B-Seite ausgebildet ist. A-Seite und B-Seite können dabei entweder als eigenständige Elektromotoren ausgebildet sein, sodass der zweite Elektromotor 31 tatsächlich zwei Elektromotoren (A-Seite und B-Seite) umfasst oder aber als separat ansteuerbare Wicklungsgruppen (A-Seite und B-Seite) des zweiten Elektromotors 31 ausgebildet sein. Dem ersten Elektromotor 21 und dem zweiten Elektromotor 31 ist dabei jeweils eine Steuereinheit 22, 32 zugeordnet. Der jeweilige Elektromotor 21, 31, insbesondere die A-Seite und die B-Seite des jeweiligen Elektromotors 21, 31 wird dabei gemäß einer feldorientierten Regelung, also einer Vektorregelung, von der zugeordneten Steuereinheit 22, 32 gesteuert.

Des Weiteren ist in diesem Ausführungsbeispiel vorgesehen, dass auch der DC-Bus 40 redundant ausgelegt ist und eine DC-A-Seite und eine DC-B-Seite aufweist, wobei die DC-B-Seite eine Spannungsversorgung bei einem Ausfalls der DC-A-Seite übernimmt. Toleranzen bezüglich einer Abweichung des Ist-Spannungsniveaus von dem Soll-Spannungsniveau sind dabei in Bezug auf die DC-A-Seite kleiner festgelegt als in Bezug auf die DC-B-Seite. Aus diesem Grund sind für Abweichungen des Ist-Spannungsniveaus von dem Soll-Spannungsniveau für die DC-A-Seite und die DC-B-Seite unterschiedliche vorbestimmte Werte für ein Auslösen von Maßnahmen Rückführen eines Ist-Spannungsniveaus, das ein Soll-Spannungsniveau überschritten hat, hinterlegt. Ein Auslösen von Maßnahmen, wenn das Ist-Spannungsniveau des DC-Busses 40 das Soll-Spannungsniveau des DC-Busses 40 überschritten hat, wird dabei nachfolgend beispielhaft für die DC-A-Seite beschrieben.

Dabei ist in diesem Ausführungsbeispiel vorgesehen, dass geringe Überschreitungen des Soll-Spannungsniveaus, insbesondere verursacht durch von dem ersten Elektromotor 21 in einem Generatorbetrieb erzeugten elektrischen Strömen von bis zu 10 A, von einer für das Energie-Management des DC-Busses zuständigen DC-Bus-Steuereinheit 45 abgesenkt werden, und so das Ist-Spannungsniveau zur Heranführung an das Soll-Spannungsniveau reduziert wird.

Darüber hinaus überwacht die zweite Steuereinheit 32 des Lenksystems ein aktuelles Ist-Spannungsniveau des DC-Busses 40 in Bezug auf ein Überschreiten eines Soll-Spannungsniveaus des DC-Busses 40 um einen vorbestimmten ersten Wert. Bei einer erkannten Überschreitung um den vorbestimmten ersten Wert wird dabei die A-Seite des zweiten Elektromotors 31 für eine Umwandlung von elektrischer Energie in der A-Seite des zweiten Elektromotors 31 von der zweiten Steuereinheit 32 angesteuert, um so das Ist-Spannungsniveau wieder auf das Soll-Spannungsniveau in dem DC-Bus 40 abzusenken. Der vorbestimmte erste Wert kann insbesondere zwischen 0,1 V und 10 V (V: Volt) liegen, insbesondere abhängig von dem an dem DC-Bus 40 anliegenden Spannungsniveau. Beträgt das Soll-Spannungsniveau auf dem DC-Bus 40 beispielsweise 12 V, kann der vorbestimmte erste Wert insbesondere 2 V betragen, sodass also bei einem Ist-Spannungsniveau von 14 V die A-Seite des zweiten Elektromotors 31 entsprechend angesteuert wird.

Dabei wird zur energetischen Umwandlung von das Ist-Spannungsniveau anhebenden generierten elektrischen Strömen der d-Vektor des rotorbezogenen d/q-Systems für die A-Seite des zweiten Elektromotors 31 und damit der Strom I_d für die A-Seite dieses Elektromotors 31 derart angepasst, dass das Ist-Spannungsniveau wieder auf das Soll-Spannungsniveau abgesenkt wird. Insbesondere kann hierzu vorgesehen sein, dass die Soll-Spannung gemäß dem Soll-Spannungsniveau des DC-Busses 40 neben der tatsächlichen Ist-Spannung gemäß dem Ist-Spannungsniveau des DC-Busses 40 an einen Eingang für einen Pl-Regler der zweiten Steuereinheit 32 angelegt wird, wenn erkannt wird, dass das Ist-Spannungsniveau das Soll-Spannungsniveau um den vorbestimmten ersten Wert überschritten hat. Vorteilhafterweise unter Berücksichtigung der an dem PI-Regler anliegenden Ist-Spannung und Soll-Spannung und von an d-q-Spannungsausgängen des PID-Reglers aktuell anliegende Spannungen U_d und U_q und der im Rahmen der Vektorregelung rückgekoppelten Ströme I_d und I_q wird eine erforderliche Anpassung des Stroms I_d ermittelt, und ein entsprechend angepasster Strom I_d bereitgestellt, der erforderlich ist, damit einerseits die A-Seite des zweiten Elektromotors 31 entsprechend einer erfassten Lenkvorgabe betrieben werden kann und andererseits überschüssige elektrische Energie in der A-Seite des zweiten Elektromotors 31 zur Absenkung des Ist-Spannungsniveaus auf das Soll-Spannungsniveau umgewandelt wird.

Des Weiteren überwacht die ersten Steuereinheit 21 auf dem DC-Bus 40 ein Überschreiten der Soll-Spannung durch die Ist-Spannung um einen vorbestimmten zweiten Wert. Dieser vorbestimmte zweite Wert ist dabei größer, als der vorbestimmte erste Wert, und kann insbesondere an das jeweilige System angepasst festgelegt werden, insbesondere mit einem Wert zwischen 1 V und 18 V . Diese Überwachung erfolgt dabei unabhängig von der Überwachung durch die zweite Steuereinheit 32. Da bei einem Ist-Spannungsniveau, das das Soll-Spannungsniveau um den festgelegten zweiten Wert oder mehr übersteigt, auch der festgelegte erste Wert überschritten ist, wird die A-Seite des zweiten Elektromotors 31 wie bereits ausgeführt von der zweiten Steuereinheit 32 angesteuert. Ergänzend wird nun aber von der ersten Steuereinheit in analoger Weise der erste Elektromotor 21 zur unterstützenden Reduzierung des Ist-Spannungsniveaus angesteuert.

Beispielsweise kann vorgesehen sein, dass das Soll-Spannungsniveau 13,8 V beträgt. Der erste vorbestimmte Wert beträgt dabei diesem Beispiel 0,2 V und der zweite vorbestimmte Wert 2,2 V. Beträgt das Ist-Spannungsniveau also 14 V oder mehr, so wird die A-Seite des zweiten Elektromotors 31 zur Umwandlung der elektrischen Energie und Absenkung des Ist-Spannungsniveaus auf das Soll-Spannungsniveau angesteuert. Beträgt das Ist-Spannungsniveau 16 V oder mehr, wird vorteilhafterweise ergänzend der erste Elektromotor 21 zur energetischen Umwandlung von das Ist-Spannungsniveau anhebenden generierten elektrischen Strömen angesteuert, insbesondere so lange, bis das Ist-Spannungsniveau wieder unter 16 V abgesunken ist. Ist das Ist-Spannungsniveau weiter unter 14 V abgesunken, endet vorteilhafterweise auch die Ansteuerung der A-Seite des zweiten Elektromotors 31 zum "Verbrennen" der überschüssigen Energie.

Darüber hinaus ist optional vorgesehen, dass die der B-Seite des zweiten Elektromotors 31 zugeordnete zweite Steuereinheit 32 auf dem DC-Bus 40 ein Überschreiten der Soll-Spannung durch die Ist-Spannung um einen vorbestimmten dritten Wert überwacht, wobei dieser vorbestimmte dritte Wert größer ist, als der vorbestimmte zweite Wert. Dieser dritte Wert kann insbesondere mit einem Wert zwischen 10 V und 20 V festgelegt sein. Diese Überwachung erfolgt dabei unabhängig von der Überwachung des ersten Wertes durch die der A-Seite des zweiten Elektromotors 31 zugeordneten zweite Steuereinheit 32 und unabhängig von der Überwachung des zweiten Wertes durch die dem ersten Elektromotor 21 zugeordneten ersten Steuereinheit 22. Bei einem Ist-Spannungsniveau, das das Soll-Spannungsniveau wenigstens um den festgelegten dritten Wert übersteigt, wird also die A-Seite des zweiten Elektromotors 31, der erste Elektromotor 21 und die B-Seite des zweiten Elektromotors mit einem angepassten Wert für den Strom I_d betrieben, um so das Ist-Spannungsniveau zur reduzieren und wieder ans das Soll-Spannungsniveau heranzuführen. Für unterschiedliche Ist-Spannungsniveaus, die das Soll-Spannungsniveau überschreiten, werden also unterschiedliche, den jeweiligen Ist-Spannungsniveaus zugeordnete Ansteuerungen der Elektromotoren 21, 31 durchgeführt. Die Erfassung des Ist-Spannungsniveaus durch die Steuereinheiten 22, 32 erfolgt dabei in Echtzeit, wobei die Erfassung über zwischen den Steuereinheiten 22, 32 synchronisiert wird.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksystem
- 2: erster Aktuator
- 21: erster Elektromotor
- 22: erste Steuereinheit
- 3: zweiter Aktuator
- 31: zweiter Elektromotor
- 32: zweite Steuereinheit
- 4: Lenkwelle
- 5: Lenkhandhabe
- 6: Lenkgetriebe
- 61: Koppelstange (Zahnstange)
- 62: Spindeltrieb
- 63: Transmissionsriemen
- 8: lenkbares Rad
- 9: Spurstange
- 10: Signalleitung
- 40: DC-Bus
- 45: DC-Bus-Steuereinheit
- 50: DC/DC-Wandler

## Patentansprüche

1. Verfahren zum Betreiben eines elektromechanischen Lenksystems (1) in einem Kraftfahrzeug, wobei das Lenksystem (1) wenigstens einen Aktuator (2, 3) mit wenigstens einem Elektromotor (21, 31) umfasst, wobei der wenigstens eine Elektromotor (21, 31) über einen DC-Bus (40) an ein elektrisches Bordnetz des Kraftfahrzeugs angebunden ist, und wobei der wenigstens eine Elektromotor (21, 31) fahrsituationsabhängig in einem Motorbetrieb oder einem Generatorbetrieb betrieben wird, **dadurch gekennzeichnet, dass** von wenigstens einer Steuereinheit (22, 32) des Lenksystems (1) ein Ist-Spannungsniveau des DC-Busses (40) in Bezug auf ein Überschreiten eines Soll-Spannungsniveaus des DC-Busses (40) um einen vorbestimmten Wert überwacht wird, wobei bei einer erkannten Überschreitung um einen ersten vorbestimmten Wert das Ist-Spannungsniveau durch eine Umwandlung von elektrischer Energie in wenigstens einem der Elektromotoren (21, 31) reduziert wird.

2. Verfahren nach Anspruch 1, **dadurch gekennzeichnet, dass** für unterschiedliche Ist-Spannungsniveau, die das Soll-Spannungsniveau überschreiten, den jeweiligen Ist-Spannungsniveaus zugeordnete unterschiedliche Ansteuerungen des wenigstens einen Elektromotors (21, 31) erfolgen.

3. Verfahren nach Anspruch 1 oder Anspruch 2, **dadurch gekennzeichnet, dass** bei einer erkannten Überschreitung des Soll-Spannungsniveaus bis zu einem zweiten Wert, wobei der zweite Wert kleiner ist als der erste Wert, eine dem DC-Bus (40) zugeordnete DC-Bus-Steuereinheit (45) eine Reduzierung des Ist-Spannungsniveaus steuert.

4. Verfahren nach einem der vorstehenden Ansprüche, **dadurch gekennzeichnet, dass** der DC-Bus (40) redundant ausgelegt ist und eine DC-A-Seite und eine DC-B-Seite aufweist, wobei die DC-B-Seite eine Spannungsversorgung bei einem Ausfall der DC-A-Seite übernimmt, wobei Toleranzen bezüglich einer Abweichung des Ist-Spannungsniveaus von dem Soll-Spannungsniveau in Bezug auf die DC-A-Seite kleiner sind als in Bezug auf die DC-B-Seite, und wobei für Abweichungen des Ist-Spannungsniveaus von dem Soll-Spannungsniveau für die DC-A-Seite und die DC-B-Seite unterschiedliche vorbestimmte Werte für eine Auslösung der Umwandlung elektrischer Energie in dem wenigstens einen Elektromotor (21, 31) festgelegt sind.

5. Verfahren nach einem der vorstehenden Ansprüche, **dadurch gekennzeichnet, dass** das Lenksystem (1) eine Mehrzahl von Aktuatoren (2, 3) umfasst, wobei jedem Aktuator (2, 3) jeweils eine Steuereinheit (22, 32) zugeordnet ist, wobei jede dieser Steuereinheiten (22, 32) die Überwachung des Ist-Spannungsniveaus des DC-Busses (40) in Bezug auf ein Überschreiten des Soll-Spannungsniveaus des DC-Busses (40) um einen vorbestimmten Wert durchführt, wobei für jede der Steuereinheiten (22, 32) jeweils eine andere Abweichung des Ist-Spannungsniveaus von dem Soll-Spannungsniveau vorgegeben ist, die eine Ansteuerung zur Reduzierung des Ist-Spannungsniveaus auslöst.

6. Verfahren nach einem der vorstehenden Ansprüche, **dadurch gekennzeichnet, dass** der wenigstens eine Elektromotor (21, 31) von einer Steuereinheit (22, 32) mittels einer Vektorregelung gesteuert wird, wobei ein d-Vektor mit einem zugeordneten Strom I_d und ein q-Vektor mit einem zugeordneten Strom I_q eines rotorbezogenen d/q-Systems für den wenigstens einen Elektromotor (21, 31) mittels eines ersten Reglers der Steuereinheit (22, 32) beeinflusst werden, wobei der d-Vektor des rotorbezogenen d/q-Systems für den wenigstens einen Elektromotor (21, 31) für die Umwandlung der elektrischen Energie angepasst wird.

7. Verfahren nach einem der vorstehenden Ansprüche, **dadurch gekennzeichnet, dass** das Lenksystem (1) als den wenigstens einen Aktuator (2, 3) mit dem wenigstens einen Elektromotor (21, 31) einen über eine Lenkwelle (4) auf eine Lenkhandhabe (5) wirkenden Feedback-Aktuator (2) mit einem ersten Elektromotor (21) und einen über ein Lenkgetriebe (6) auf lenkbare Räder (8) des Kraftfahrzeugs wirkenden Lenksteller (3) mit einem zweiten Elektromotor (31) umfasst.

8. Verfahren nach Anspruch 7, **dadurch gekennzeichnet, dass** bei der erkannten Überschreitung um mindestens den vorgegebenen ersten Wert das Ist-Spannungsniveau durch eine Umwandlung von elektrischer Energie in dem zweiten Elektromotor (31) reduziert wird.

9. Verfahren nach Anspruch 7 oder Anspruch 8, **dadurch gekennzeichnet, dass** der zweite Elektromotor (31) des Lenkstellers (3) redundant mit einer separat ansteuerbaren A-Seite und einer separat ansteuerbaren B-Seite ausgebildet ist, wobei bei der erkannten Überschreitung um mindestens den vorgegebenen ersten Wert das Ist-Spannungsniveau durch eine Umwandlung von elektrischer Energie in der A-Seite des zweiten Elektromotors (31) reduziert wird.

10. Verfahren nach Anspruch 9, **dadurch gekennzeichnet, dass** bei der erkannten Überschreitung um mindestens einen vorgegebenen dritten Wert, wobei der dritte Wert größer ist als der erste Wert, das Ist-Spannungsniveau durch eine Umwandlung von elektrischer Energie in der B-Seite des zweiten Elektromotors (31) reduziert wird.

11. Verfahren nach einem der Ansprüche 7 bis 10, **dadurch gekennzeichnet, dass** bei einer erkannten Überschreitung um mindestens einen vorgegebenen zweiten Wert, wobei der zweite Werte größer ist als der erste Wert, das Ist-Spannungsniveau durch eine ergänzende Umwandlung von elektrischer Energie in dem ersten Elektromotor (21) reduziert wird.

12. Elektromechanisches Lenksystem (1), das wenigstens einen Aktuator (2, 3) mit wenigstens einem Elektromotor (21, 31) und wenigstens einer Steuereinheit (22, 32) umfasst, wobei der wenigstens eine Elektromotor (21, 31) fahrsituationsabhängig in einem Motorbetrieb oder einem Generatorbetrieb betrieben werden kann, **dadurch gekennzeichnet, dass** das Lenksystem (1) ausgebildet ist, nach einem Verfahren gemäß einem der Ansprüche 1 bis 11 betrieben zu werden.

13. Lenksystem (1) nach Anspruch 12, **dadurch gekennzeichnet, dass** das Lenksystem (1) ein Steer-by-Wire-Lenksystem ist.
